Europäisches Patentamt

European Patent Office

Office européen des brevets

(19)

(11) Veröffentlichungsnummer: **0 286 734 B1**

(12) **EUROPÄISCHE PATENTSCHRIFT**

(45) Veröffentlichungstag der Patentschrift: **09.12.92**

(21) Anmeldenummer: **87200680.4**

(22) Anmeldetag: **11.04.87**

(51) Int. Cl.5: **C08F 255/02**, C09J 151/06,
//(C08F255/02,22:06,212:08)

(54) **Gepfropfte lineare Polyethylene mit geringer Dichte, Verfahren zu ihrer Herstellung und ihre Verwendungen.**

(43) Veröffentlichungstag der Anmeldung:
**19.10.88 Patentblatt 88/42**

(45) Bekanntmachung des Hinweises auf die
Patenterteilung:
**09.12.92 Patentblatt 92/50**

(84) Benannte Vertragsstaaten:
**AT BE CH DE ES FR GB IT LI NL SE**

(56) Entgegenhaltungen:
**EP-A- 268 985**
**FR-A- 1 322 448**
**US-A- 4 440 911**

(73) Patentinhaber: **DSM N.V.**
**Het Overloon 1**
**NL-6411 TE Heerlen(NL)**

(72) Erfinder: **Vroomans, Hubertus Johannes**
**Spaanse Singel 18**
**NL-6191 GK Beek (L.)(NL)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft neue gepfropfte lineare Polyethylene mit einer Dichte unter 940 kg/m$^3$, ausgenommen Ethylen-$\alpha$-Olefin- und Ethylen-$\alpha$-Olefin-Dien-Kautschuke, ferner Verfahren zu ihrer Herstellung und die Verwendung dieser Polyethylene.

Aus der DE-A-2 108 749 sind Polymere, die freie Carboxylgruppen enthalten, insbesondere lineare Polyethylene mit hoher Dichte (d > 940 kg/m$^3$, HDPE) und verzweigte Polyethylene mit niedriger Dichte (d < 940 kg/m$^3$, LDPE) bekannt. Diese Polymere eignen sich nicht als Schlagfestigkeitsmodifizierungsmittel für Kunststoffe.

US-A-4440911 betrifft ein lineaires Polyethylen mit niedriger Dichte das nur mit carboxylgruppenhaltigen Verbindungen modifiziert ist. Wenn dieses modifizierte Polyethylen aber mehr als 3 gew.% Carboxylgruppen enthält wird die Adhäsion nicht weiter verbessert. Ausserdem tritt dann auch Verfärbung ein.

In das nicht vorveröffentlichte Dokument EP-A-268985 wird ein modifizierter EPDM- oder EPM-Kautschuk beschrieben.

Die bisher bekannten Schlagfestigkeitsmodifizierungsmittel für Kunststoffe, wie mit Acrylsäure modifiziertes Polyethylen, mit Maleinsäureanhydrid modifizierter EPDM-Kautschuk, Copolymere aus Acrylsäure und Acrylsäureestern und Ethylen und Terpolymere aus Ethylen, Acrylsäureestern und Maleinsäureanhydrid, sind mit dem Nachteil behaftet, dass sie eine Verfärbung der modifizierten Polyamide und Polyester bedingen, aufwendig herzustellen sind, wobei relativ niedrige Umsätze erreichbar sind, und bezüglich ihrer schlagfestigkeitsmodifizierenden Wirkung noch verbesserungswürdig sind.

Gepfropftes Polybutadien hat den Nachteil, nicht genügend UV-beständig zu sein, während Polymere auf Acrylatbasis (z.B. Methylmethacrylatpolymer) schon bei relativ hohen Temperaturen spröde werden.

Die Erfindung hat sich die Aufgabe gestellt, neue Verbindungen zu schaffen, welche in sich die Vorteile und Verwendungsmöglichkeiten der aus der DE-A-2 108 749 bekannten Polymeren mit der Einsatzmöglichkeit als Schlagfestigkeitsmodifizierungsmittel für Kunststoff ohne die obengenannten Nachteile in sich vereinigen und eine gute UV-Beständigkeit sowie eine hohe Zähigkeit auch bei niedrigen Temperaturen besitzen.

Diese Aufgabe wird durch gepfropfte lineare Polyethylene mit einer Dichte unter 940 kg/m$^3$ (LLDPE), ausgenommen Ethylen-$\alpha$-Olefin- und Ethylen-$\alpha$-Olefin-Dien-Kautschuke, die mit einer oder mehreren carboxylgruppenhaltigen Verbindungen und einer oder mehreren vinylaromatischen Verbindungen gepfropft sind, gelöst.

Die Erfindung beruht auf der Feststellung, dass gepfropfte lineare Polyethylene mit niedriger Dichte in überraschender Weise besonders günstige Eigenschaften haben und sowohl sehr gute Schlagfestigkeitsmodifizierungsmittel für beispielsweise Polyamid, Polycarbonat, Polyacetate, vinylaromatische Polymere und Polyester sind, als auch eine sehr gute UV-Beständigkeit und hohe Zähigkeit aufweisen und keine Verfärbungen bedingen, wobei sie ausserdem in hervorragender Weise geeignet sind als Klebemittel oder Klebschichten, als Haftschichten in Mehrschichtfolien, als Heisssiegelschichten, als verträglich machende Mittel für polare und apolare Kunststoffe, die gegebenenfalls mit mineralischen Füllstoffen gefüllt sind, wobei sie sich ausserdem für einen Einsatz in Mischungen mit anderen Polymeren, insbesondere Polyolefinhomo- und -copolymeren (wie beispielsweise Polypropylen, EPDM-Kautschuk, verschiedene Polyethylene etc.) eignen. Dabei können sie in einfacher Weise zur Erzielung der jeweils gewünschten Eigenschaften massgeschneidert hergestellt werden.

Vorzugsweise sind die gepfropften linearen Polyethylene mit niedriger Dichte gemäss der Erfindung mit herkömmlichen carboxylgruppenhaltigen Pfropfungsmaterialien für Polyethylene gepfropft, wie beispielsweise Acrylsäure, Methacrylsäure, Maleinsäure, Fumarsäure, Itaconsäure, Citraconsäure, Crotonsäure, Endo-cis-bicyclo(2,2,1)hepto-5-en-2,3-dicarbonsäure und Bicyclo(2,2,1)hepto-2-en-5,6-dicarbonsäure, den Derivaten dieser Säuren, wie ihren Säurehalogeniden, Amiden, Imiden, Anhydriden, Estern und Salzen. Beispiele für diese Derivate sind Malenylchlorid, Maleimid, Acrylamid, Methacylamid, Glycidylmethacrylat, Maleinsäureanhydrid, Itaconsäureanhydrid, Citraconsäureanhydrid, Bicyclo(2,2,1)hepto-2-en-5,6-dicarbonsäureanhydrid, Monomethylmaleat, Dimethylmaleat, Glycidylmaleat, Dimethylfumarat, Diethylitaconat, Dimethylcitraconat, Dimethylbicyclo(2,2,1)hepto-2-en-5,6-dicarboxylat, Methylacrylat, Methylmethacrylat, Glycidylacrylat, Natriumacrylat, Natriummethacrylat, Kaliummethacrylat, Dinatriummaleat, Dikaliummaleat, Mononatriummaleat, Dinatriumfumarat, Dilithiumitaconat, Diammoniumcitraconat, Dinatrium-bicyclo(2,2,1)hepto-2-en-5,6-dicarboxylat, 4-Methylcyclohex-4-en-1,2-dicarbonsäureanhydrid, 1,2,3,4,5,8,9,10-Octahydronaphthalin-2,3-dicarbonsäureanhydrid, Bicyclo(2,2,2)oct-7-en-2,3,5,6-tetracarbonsäure-2,3,5,6-dianhydrid, Bicyclo(2,2,1)hept-5-en-2,3-dicarbonsäureanhydrid, Methylbicyclo(2,2,1)hept-5-en-2,3-dicarbonsäure sowie 7-Oxabicyclo-(2,2,1)hept-5-en-2,3-dicarbonsäureanhydrid. Auch Mischungen aus diesen Substanzen können verwendet werden.

EP 0 286 734 B1

Die zum Pfropfen von linearen Polyethylenen mit niedriger Dichte verwendete(n) vinylaromatische(n) Verbindung(en) sind beispielsweise Styrol, substituierte Styrole, wie R-Styrol, wobei R für eine Alkylgruppe mit 1 bis 10 Kohlenstoffatomen steht. Auch Mischungen dieser vinylaromatischen Monomere können verwendet werden.

Das Molverhältnis des vinylaromatischen Monomers zu der carboxylgruppenhaltigen Verbindung beträgt vorzugsweise 5 : 1 bis 1 : 5, und insbesondere 2 : 1 bis 1 : 2.

Insbesondere haben sich lineare Polyethylene mit niedriger Dichte, die mit einer Mischung von Styrol und Maleinsäureanhydrid, vorzugsweise im Molverhältnis von 5 : 1 bis 1 : 5 und insbesondere 2 : 1 bis 1 : 2 gepfropft sind, als besonders vorteilhafte Schlagfestigkeitsmodifizierungsmittel für Polymere erwiesen.

Besonders herausragende Ergebnisse werden unter Einsatz von gepfropften Polyethylenen mit sehr geringer Dichte (Dichte $\leq$ 910 kg/m$^3$) (VLDPE) und insbesondere mit einer Dichte $\leq$ 900 kg/m$^3$ (ULDPE), erzielt. Die Dichte liegt im allgemeinen nicht unter 870 kg/m$^3$, insbesondere nicht unter 880 kg/m$^3$. Vorzugsweise sind die zur Aufpfropfung in Frage kommenden linearen Polyethylene Copolymere von Ethylen und einem oder mehreren $\alpha$-Olefinen mit 3 bis 18 C-Atomen, insbesondere mit 5 bis 12 C-Atomen. Auch Ethylenterpolymere (wie z.B. Propylen oder Butylen und $\alpha$-Olefine mit 5 bis 12 C-Atomen) kommen in Frage. Ausserdem können auch mehrfach ungesättigte Verbindungen, wie Diene (z.B. 1,9-Dekadien) anwesend sein.

Mit Vorteil kann man auch Mischungen aus diesen linearen Polyethylenen pfropfen oder Mischungen mit anderen Polyolefinen, wie beispielsweise Polypropylen, Ethylen/Propylen-Copolymeren, Ethylen/Propylen-Terpolymeren, anderen Polyethylenen, Polybutadien oder Mischungen davon etc. Wenigstens sollten jedoch 5 Gew.-%, insbesondere 10 Gew.-% und in besonders vorteilhafter Weise 30 Gew.-% der Mischung aus einem linearen Polyethylen mit niedriger Dichte bestehen.

Die erfindungsgemäss in Frage kommenden linearen Polyethylene mit niedriger Dichte (LLDPE) und mit sehr geringer Dichte (VLDPE) und äußerst geringer Dichte (ULDPE) können nach bekannten Methoden hergestellt werden, wie z.B. nach mit Übergangsmetallverbindungen katalysierten Verfahren, insbesondere unter Einsatz von Ziegler-Natta-Katalysatoren (vgl. beispielsweise die GB-A-1 235 062). Vorzugsweise ist ausser der Titanverbindung auch eine Vanadiumverbindung anwesend, und auch noch eine Halogenverbindung, insbesonders eine organische Halogenverbindung. Vorzugsweise wird ein Katalysator verwendet, der eine Titan-, Vanadium-, Organoaluminium-, organische Halogen- und Organomagnesiumverbindung enthält. Übliche Zusatzstoffe, wie Stabilisatoren, Gleitmittel etc., können in den Polymeren zugegen sein.

Für die erfindungsgemässen Zwecke hat sich ein Pfropfungsgrad von 0,2 bis 20 Gew.-% (Anteil an carboxylgruppenhaltigen Verbindungen), bezogen auf das Polyethylen, als günstig erwiesen, wobei insbesondere Pfropfungsgrade von 0,5 bis 15 Gew.-% und in besonders bevorzugter Weise von 1 bis 10 Gew.-%, in Frage kommen.

Die größe der Teilchen des gepfropften Polymers ist vorzugsweise klein, das heißt < 0,5 $\mu$m, insbesondere < 0,1 $\mu$m, und > 0,001 $\mu$m, insbesondere > 0,005 $\mu$m.

Eine Methode zur Aufpfropfung von Styrol/Maleinsäureanhydrid auf Polymere mit aktiven oder labilen Wasserstoffatomen, wie Polyethylen, wird in der DE-A-2 108 749 beschrieben. Diese Methode besteht darin, bei Verwendung von Polyethylen ein Gemisch aus Styrol und Maleinsäureanhydrid mit dem Polyethylen bei einer Temperatur oberhalb von etwa 120¤C umzusetzen.

Zur Herstellung der erfindungsgemäßen, mit Styrol und Maleinsäureanhydrid gepfropften Polyethylene kann dieses Verfahren angewendet werden, das von dem Einsatz von Lösungsmitteln und radikalischen Katalysatoren zur Beschleunigung der Reaktion abrät. Es hat sich jedoch herausgestellt, dass die Verwendung eines Lösungsmittels, insbesondere eines polaren Lösungsmittels, wie eines Ketons, beispielsweise Aceton, und/oder der Einsatz von radikalischen Initiatoren, wie Peroxiden und Azoverbindungen, sowohl die Aufpfropfungsgeschwindigkeit als auch den Aufpfropfungsgrad und den Umsetzungsgrad erhöhen.

Eine hohe Scherwirkung, die einen innigen Kontakt des aufzupfropfenden Materials bewirkt, ist in diesem Zusammenhang ebenfalls wesentlich.

Die Erfindung betrifft demgemäss auch ein Verfahren zur Herstellung von gepfropften Polyethylenen mit geringer Dichte durch Umsetzung der Polyethylene mit einer oder mehreren carboxylgruppenhaltigen Verbindungen und einer oder mehreren vinylaromatischen Verbindungen, bei einer Temperatur oberhalb 110¤C unter der Einwirkung von Scherkräften, in Anwesenheit eines Lösingsmittels und/oder eines radikalischen Katalysators sowie gegebenenfalls eines Antioxidationsmittels.

In zweckmässiger Weise werden erfindungsgemäss die in Frage kommenden Polyethylene mit niedriger Dichte, entsprechend der bevorzugten Ausführungsform unter Einsatz von Styrol/Maleinsäureanhydrid, insbesondere in einem Molverhältnis von 5 : 1 bis 1 : 5, vorzugsweise von 2 : 1 bis 1 : 2, in der Weise gepfropft, dass die Pfropfungsreaktion bei einer Temperatur von 110 bis 200¤C in einer Vorrichtung, die eine starke Scherwirking ausübt, um die Reaktanten innig miteinander zu vermischen, durchgeführt wird,

3

EP 0 286 734 B1

wobei ein Lösungsmittel, wie Aceton, in einem Gewichtsverhältnis zu dem Pfropfmaterial von 5 : 1 bis 1 : 20, insbesondere 2 : 1 bis 1 : 10, und ein radikalischer Katalysator, ausgewählt aus organischen Peroxiden, wie Dialkylperoxiden, Diarylperoxiden, Diacylperoxiden, organischen Persäuren, organischen Persäureestern, Alkylhydroperoxiden, Aralkylperoxiden, oder Azoverbindungen, vorzugsweise in einer Menge von 0,01 bis 0,5 Gew.-%, bezogen auf das Polyethylen, verwendet werden. Vorzugsweise beträgt dabei die Verweilzeit in der Reaktionsvorrichtung 1 bis 15 Minuten. Vor dem Austreten aus der Reaktionsvorrichtung können in üblicher Weise das Lösungsmittel und etwa noch vorhandene Monomere entfernt werden, beispielsweise in einer Entgasungsvorrichtung, worauf das gepfropfte Polyethylen granuliert werden oder anderweitig verformt werden kann. In zweckmässiger Weise kann ihm ein Antioxidationsmittel zur Verhinderung einer Vernetzung zugesetzt werden, beispielsweise ein phenolisches oder thiophenolisches Antioxidationsmittel, wie Irganox 1076$^R$, Irganox 1010$^R$ oder Di-tert.-butyl-p-cresol. Diese Antioxidationsmittel beeinflussen nicht die Pfropfung, verhindern jedoch eine unerwünschte Vernetzung.

Als Reaktionsvorrichtungen, in denen unter Einwirkung einer hohen Scherwirkung die eingesetzten Polyethylene mit dem (den) carboxylgruppenhaltigen Verbindung(en) und der (den) vinylaromatischen Verbindung(en) gepfropft werden können, kommen beispielsweise Brabender-Kneter und Ein- oder Zwei-Schnecken-Extruder, hinter denen ein oder mehrere statische Mischgeräte angebracht sein können, um die Verweilzeit zu verlängern, in Frage. In zweckmässiger Weise wird dabei das Polyethylen in eine derartige Vorrichtung eingeführt und aufgeschmolzen, worauf an der Stelle, an der aufgeschmolzenes Polyethylen vorliegt, eine Lösung der Pfropfverbindungen, die gegebenenfalls einen radikalischen Initiator und/oder ein Antioxidationsmittel enthält, zugeführt und innig mit der Schmelze unter Einwirkung hoher Scherkräfte zur Durchführung der Aufpfropfungsreaktion vermischt wird.

Die erfindungsgemässen gepfropften Polyethylene, die in zweckmässiger Weise Schmelzindices von 0,01 bis 50 g/10', gemessen nach der ASTM D-1238-E-Methode, besitzen, werden in Mengen von 10 bis 90, vorzugsweise 20 bis 80 Gew.-%, als Schlagfestigkeitsmodifizierungsmittel für beispielsweise Polycarbonate, Polyacetale, vinylaromatische Polymere, Polyamide und Polyester verwendet. Sie können in an sich bekannter weise mit den jeweiligen Polymeren in Extrudern vermischt werden.

Polycarbonate sind bekannt und können durch Umsetzung von Dihydroxy- oder Polyhydroxyverbindungen mit Phosgen oder Diestern von Carbonsäuren hergestellt werden. Besonders geeignete Dihydroxyverbindungen sind Dihydroxydiarylalkane, beispielsweise solche, die Alkylgruppen oder Chlor- oder Bromatome in der o-Stellung bezüglich der Hydroxylgruppe aufweisen.

Die folgenden Verbindungen sind bevorzugte Dihydroxydiarylalkane: 4,4'-Dihydroxy-2,2-diphenylpropan (Bisphenol A), Tetramethylbisphenol A, Tetrachlorbisphenol A, Tetrabrombisphenol A sowie Bis(4-hydroxyphenol)-p-diisopropylbenzol. Neben den Polycarbonaten, die aus Dihydroxydiarylalkanen allein hergestellt werden können, können verzweigte Polycarbonate verwendet werden. Zur Herstellung von Polycarbonaten dieses Typs kann ein Teil der Dihydroxyverbindung durch eine Polyhydroxyverbindung ersetzt werden.

Die Polyacetale sind kristalline thermoplastische Harze. Beispiele für diese Polyacetale sind Formaldehydhomo- und -copolymere von Trioxan (d.h. dem Trimer von Formaldehyd) und einer kleinen Menge cyclischer Ether, wie Ethylenoxid und 1,3-Dioxan. Diese Polyacetale können allein oder in Mischung verwendet werden.

Die vinylaromatischen Polymere sind Homo- und Copolymere von vinylaromatischen Monomeren, wie Styrol, substituierten Styrolen, wie α-Methylstyrol, wobei als Comonomere Butadien (SBR), Acrylnitril (SAN), Maleinsäureanhydrid (SMA), Butadien/Acrylnitril (ABS) etc. eingesetzt werden können.

Die Polyamide werden durch Polykondensation von aliphatischen, alicyclischen und aromatischen Diaminen, wie Hexamethylendiamin, Decamethylendiamin, Dodecamethyldiamin, 2,2,4- oder 2,4,4-Trimethylhexamethylendiamin, 1,3- oder 1,4-Bis(aminomethyl)cyclohexan, Bis(p-amino-cyclohexyl)methan sowie m- oder p-Xyloldiamin mit aliphatischen, alicyclischen und aromatischen Dicarbonsäuren, wie Adipinsäure, Suberinsäure, Sebacinsäure, Cyclohexandicarbonsäure, Terephthalsäure und Isophthalsäure, sowie durch Kondensation von Lactamen, wie ε-Caprolactam und ω-Laurolactam erhalten, wobei auch Copolyamide der vorstehend erwähnten Substanzen in Frage kommen. Diese Polyamide können allein oder in Mischung eingesetzt werden.

Typische Beispiele für die vorstehend erwähnten Polyamide sind Nylon 6, Nylon 4,6, Nylon 6,6, Nylon 610, Nylon 9, Nylon 11, Nylon 12, Nylon 6/66, Nylon 66/610 sowie Nylon 6/11.

Die Polyester sind kristalline thermoplastische Harze, die aus Dihydroxyverbindungseinheiten, welche auf wenigstens eine Verbindung zurückgehen, ausgewählt aus der Gruppe bestehend aus aliphatischen Glycolen, wie Ethylenglycol, Propylenglycol, 1,4-Butandiol, Neopentylglycol und Hexamethylenglycol, alicyclischen Glycolen, wie Cyclohexandimethanol, und aromatischen Dihydroxyverbindungen, wie Bisphenol, mit wenigstens einer Dicarbonsäure, ausgewählt aus der Gruppe bestehend aus aromatischen Dicarbonsäuren, wie Terephthalsäure, Isophthalsäure und 2,6-Naphthalindicarbonsäure, aliphatischen Dicarbonsäuren,

4

wie Oxalsäure, Bernsteinsäure, Adipinsäure, Sebacinsäure und Undecadicarbonsäure, sowie alicyclischen Dicarbonsäuren, wie Tetrahydroterephthalsäure, gebildet werden. Diese Polyester können mit einer kleinen Menge an Tri- oder Polyhydroxyverbindungen und Polycarbonsäuren, wie Triolen und Tricarbonsäuren, modifiziert werden, sofern die modifizierten Harze thermoplastisch sind. Diese Polyester können allein oder in Mischung verwendet werden.

Typische Beispiele für die vorstehend erwähnten Polyester sind Polyethylenterephthalat, Polybutylenterephthalat sowie Polyethylenisophthalat-terephthalat-Copolymere.

Der Hauptverwendungszweck des erfindungsgemässen gepfropften linearen Polyethylens mit niedrigerer Dichte besteht in seinem Einsatz als Schlagfestigkeitsmodifizierungsmittel für Polymere. Daneben können sie jedoch auch nach üblichen Methoden zu Formgegenständen verarbeitet werden, wie Filmen, Rohren, Fasern oder dergleichen, beispielsweise durch Schmelzextrusion, wobei in vorteilhafter Weise derselbe Extruder verwendet wird, in welchem die Pfropfung stattgefunden hat. Die erzeugten Filme können einschichtig oder mehrschichtig sein.

Eine weitere Verwendung der erfindungsgemässen gepfropften linearen Polyethylene mit niedriger Dichte besteht in ihrem Einsatz als Klebemittel oder Klebeschichten oder als Haftschichten zwischen Schichten aus anderen Materialien, wie anderen Polymeren (wie Polyolefinen), Metallen, Papier etc., d.h. sie können zur Herstellung von Mehrschichtenverbundstoffen verwendet werden, beispielsweise zum Verbinden von Polymer mit Polymer, Polymer mit Metall, sowie Glass, gewebten oder nicht gewebten Stoffen oder Matten, Papier oder dergleichen.

Eine weitere Verwendung besteht in dem Einsatz als Heisssiegelschichten auf Substraten, wie anderen Polymeren, insbesondere Polyolefinen, wie Polyethylenen oder Polypropylenen oder dergleichen. Liegen Carboxylgruppen in den gepfropften linearen Polyethylenen mit niedriger Dichte vor, dann ist es in den meisten Fällen unnötig, die Polymerfilmoberflächen, auf welche die erfindungsgemässen gepfropften Polyethylene aufgebracht werden sollen, zur Verbesserung der Haftfähigkeit durch elektrische Entladungen oder durch Flammbehandlung zu präparieren oder einen Haftüberzug aufzubringen.

Die erfindungsgemässen Polyethylene können auch zu geschäumten Produkten unter Einsatz üblicher Schäumungsmittel verarbeitet werden.

Ausserdem lassen sich die erfindungsgemässen gepfropften linearen Polyethylene beispielsweise durch Schmelzspinnen oder Folienspaltung zu Fasern verarbeiten, welche zu gewebten oder nicht gewebten Strukturen verarbeitet werden können. Sowohl gewebte als auch nichtgewebte Strukturen können mit üblichen Papier- oder Textilüberzugs- und -druckmassen bedruckt werden.

Besonders gut eignen sich die erfindungsgemässen gepfropften linearen Polyethylene mit niedriger Dichte auch als Mittel zum Verträglichmachen an sich unverträglicher oder schlecht verträglicher Materialien. Zum Beispiel ist es möglich, Polyolefine, wie Polyethylen, Polypropylen etc., mit Glas in verträglicher Weise zu vermischen, wenn wenigstens 5 Gew.-% und insbesondere wenigstens 10 Gew.-% des erfindungsgemässen Polyethylens in den Polyolefinen vorliegt. Es ist ferner auch möglich, polare und apolare Polymere unter Zusatz des erfindungsgemässen Polyethylens zu vermischen.

Die erfindungsgemässen gepfropften linearen Polyethylene mit geringer Dichte können auch als Komponenten von Mischungen oder Blends in Mengen von 5 bis 95 Gew.-%, bezogen auf die Mischung, und in vorteilhafter Weise in einer Menge von 10 bis 90 Gew.-%, insbesondere 15 bis 85 Gew.-%, bezogen auf die Mischung, verwendet werden. Die anderen Komponenten derartiger Mischungen können Kunststoffe sein, wie Polyolefine (Ethylen- und Propylen-homo- und -copolymere), vinylaromatische Homo- und Copolymere, gegebenenfalls mit beispielsweise carboxylgruppenhaltigen Monomeren, etc., sowie auch andere gepfropfte Polymere. Die anderen Komponenten können auch aus anderen Materialien als Polymeren bestehen, beispielsweise aus Glas, Talk, Russ, Metall, Holz, Papier etc.

Die folgenden Beispiele erläutern die Erfindung.

Beispiel 1

Zur Durchführung dieses Beispiels wird ein verzweigtes LDPE (d = 918; Schmelzindex (MI) = 8) verwendet.

Dieses Polyethylen wird mit einer 2 : 2 : 1-Mischung aus Styrol, Maleinsäureanhydrid und Aceton in einem Schwabenthan-Einschneckenextruder,dem drei statische Kennics-Mischer nachgeschaltet sind, gepfropft.

Das Polyethylen wird in den Extruder, der auf einer Temperatur von 150¤C gehalten wird und dessen Schnecke sich mit 150 UpM dreht, eingeführt. Dem Extruder wird an der Stelle, an welcher das Polyethylen geschmolzen ist, eine 2 : 2 : 1-Mischung aus Styrol (S)-Maleinsäureanhydrid (MA)-Aceton (Ac) zugeführt. Beim Durchwandern des Polyethylens und der S/MA/Ac-Mischung durch den Extruder sowie die auf einer Temperatur von 150¤C gehaltenen statischen Mischer erfolgt die Aufpfropfung von Styrol/Maleinsäureanhydrid auf das Polyethylen. Die Verweilzeit betrug ungefähr 11 Minuten.

Die durchgesetzten Mengen an Polyethylen (PE), die eingesetzten Mengen an S/MA/Ac, die eingesetzten Mengen an Peroxid-Initiator sowie Stabilisierungsmittel, die dem in Granulatform dem Extruder zugeführten Polyethylen (PE) zuvor zugemischt worden sind, die Gewichtsprozentmengen an MA, die, bezogen auf das PE, eingesetzt werden, (es werden demgemäss auch die entsprechenden Styrolmengen eingesetzt, die Menge an gebundenem Styrol sind ebenfalls nicht aufgeführt), die Umsätze und die Schmelzindices der erhaltenen gepfropften Produkte gehen aus der folgenden Tabelle 1 hervor.

TABELLE 1

| Versuch Nr. | Durchsatz g/min | S/MA/Ac (2:2:1) ccm/min | MA Gew.-% | Peroxid Gew.-% | Stabilisiermittel, Irganox 1076 Gew.-% | gebundenes MA Gew.-% | Umsatz % | MI g/10' | Peroxidtyp |
|---|---|---|---|---|---|---|---|---|---|
| 1 | 29 | 8 | 5 | 0,05 | - | 3,0 | 60 | 3,0 | TRIG.C |
| 2 | 62 | 6 | 4 | - | 0,1 | 0,7 | 18 | 6,1 | - |
| 3 | 62 | 6 | 4 | 0,05 | 0,1 | 2,7 | 67,5 | 3,6 | TRIG.C |
| 4 | 56 | 6 | 4,3 | 0,1 | 0,1 | 2,5 | 58 | 2,8 | TRIG.C |
| 5 | 48 | 6 | 5 | 0,15 | 0,1 | 2,6 | 52 | 2,1 | TRIG.C |
| 6 | 52 | 6 | 4,6 | 0,05 | 0,1 | 2,0 | 40 | - | LUPr130 |
| 7 | 58 | 6 | 4,1 | - | 0,1 | 0,1 | - | 7,7 | - |
| 8 | 56 | 6 | 4,2 | 0,05 | 0,1 | 3,0 | 71 | 3,5 | TRIG.C |
| 9 | 52 | 6 | 4,6 | 0,1 | 0,1 | 2,4 | 52 | 2,8 | TRIG.C |
| 10 | 54 | 6 | 4,4 | 0,15 | 0,1 | 2,3 | 52 | 2,3 | TRIG.C |

TRIG.C = Trigonox C$^R$;
LUPr130 = Luperox 130$^R$.

Beispiel 2

Es wird in der gleichen Weise, wie in Beispiel 1 beschrieben, gearbeitet, wobei zur Durchführung der Versuche 1 und 2 ein VLDPE (d = 902, M.I. = 2,2) und der Versuche 3 bis 20 ein ULDPE (d = 900, M.I. = 2,2) verwendet wird. Als Peroxid wird Trigonox C$^R$ eingesetzt.

Die Einzelheiten dieses Versuchs sowie die erhaltenen Ergebnisse gehen aus der folgenden Tabelle 2 hervor.

TABELLE 2

| Versuch Nr. | Durchsatz g/min | S/MA/Ac (2:2:1) ccm/min | MA Gew.-% | Peroxid Gew.-% | Stabilisator, Irganox 1076 Gew.-% | gebundenes MA Gew.-% | Umsatz % | MI g/10 min |
|---|---|---|---|---|---|---|---|---|
| 1 | 37 | 4,4 | 4,8 | 0,15 | - | 1,6 | 33 | 0,06 |
| 2 | 38 | 4,4 | 4,6 | 0,15 | - | 1,7 | 22 | 0,04 |
| 3 | 40 | 4,8 | 4,8 | 0,15 | - | 1,7 | 35 | 0,04 |
| 4 | 32 | 3,3 | 4 | 0,05 | 0,05 | 1,2 | 30 | 0,6 |
| 5 | 40 | 4 | 4 | 0,05 | 0,1 | 1,6 | 36 | 0,7 |
| 6 | 41 | 4,5 | 4,3 | 0,05 | 0,1 | 1,4 | 33 | 0,6 |
| 7 | 43 | 4,5 | 4,2 | 0,05 | 0,15 | 1,4 | 34 | 0,6 |
| 8 | 45 | 4,5 | 4 | 0,05 | 0,2 | 1,0 | 25 | 0,5 |
| 9 | 40 | 4 | 4 | 0,1 | 0,2 | 1,3 | 33 | 0,2 |
| 10 | 36 | 3,5 | 4 | 0,05 | 0,05 | 1,0 | 25 | 0,5 |
| 11 | 33 | 3,5 | 4,2 | 0,1 | 0,05 | 1,6 | 38 | 0,2 |
| 12 | 31 | 3 | 4 | 0,15 | 0,05 | 1,5 | 38 | 0,1 |
| 13 | 39 | 4 | 4 | 0,05 | 0,1 | 0,8 | 20 | 0,1 |
| 14 | 38 | 4 | 4,1 | 0,1 | 0,1 | 1,3 | 32,5 | 0,4 |
| 15 | 40 | 4 | 4 | 0,15 | 0,1 | 1,7 | 42 | 0,2 |
| 16 | 45 | 4,5 | 4 | 0,05 | 0,15 | 1,3 | 29 | 0,9 |
| 17 | 45 | 4,5 | 4 | 0,1 | 0,15 | 1,4 | 35 | 0,3 |
| 18 | 41 | 4 | 4 | 0,15 | 0,15 | 1,8 | 38 | 0,1 |
| 19 | 45 | 4,5 | 4 | 0,05 | 0,2 | 1,6 | 40 | 0,9 |
| 20 | 43 | 4,5 | 4 | 0,1 | 0,2 | 1,4 | 35 | 0,4 |

Beispiel 3

Als Polyethylen wird ein LDPE (d = 918, MI = 8) eingesetzt. Die Pfropfungsreaktion erfolgt in einem Zweischneckenextruder (WPZSK 42 D) bei den in der folgenden Tabelle 3 angegebenen Temperaturen. Zur Durchführung der Versuche 1 bis 7 wird das MA dem PE vor der Einführung in den Extruder zugemischt, während das Styrol in einer Menge von 5 %, bezogen auf das PE, in den Extruder eingespritzt wird.

Zur Durchführung der Versuche 8 bis 14 wird eine Mischung aus Styrol, Maleinsäureanhydrid und Aceton (2 : 2 : 1, Gewichtsverhältnis) in den Extruder eingeführt. Trigonox C[R] wird als Peroxidkatalysator eingesetzt.

In der folgenden Tabelle 3 sind die Versuchsbedingungen sowie die Schmelzindices der erhaltenen gepfropften PE zusammengefasst.

TABELLE 3

| Versuch Nr. | Durchsatz g/min | UpM | Temp. ¤C | S/MA/Ac ccm/min | MA Gew.-% | Peroxid Gew.-% | Stabilisator, Irganox 1076 Gew.-% | gebundenes MA Gew.-% | Umsatz % | MI g/10' |
|---|---|---|---|---|---|---|---|---|---|---|
| 1 | 50 | 250 | 150 | - | 5 | 0,1 | 0,05 | 2,0 | 40 | 5,1 |
| 2 | 50 | 150 | 150 | - | 5 | 0,1 | 0,05 | 2,1 | 42 | 4,0 |
| 3 | 50 | 250 | 170 | - | 5 | 0,1 | 0,05 | 5,0 | 100 | 4,4 |
| 4 | 50 | 150 | 170 | - | 5 | 0,1 | 0,05 | 2,5 | 50 | 3,2 |
| 5 | 50 | 100 | 170 | - | 5 | 0,1 | 0,05 | 2,5 | 50 | 4,4 |
| 6 | 50 | 250 | 170 | - | 5 | 0,1 | 0,1 | 3,3 | 66 | 1,5 |
| 7 | 50 | 150 | 170 | - | 5 | 0,1 | 0,1 | 2,7 | 54 | 2,6 |
| 8 | 48 | 250 | 150 | 5 | 4 | 0,05 | 0,05 | 3,7 | 92 | 3,6 |
| 9 | 48 | 250 | 150 | 6,5 | 5,4 | 0,05 | 0,05 | 5,5 | 100 | 3,0 |
| 10 | 48 | 250 | 150 | 7 | 6 | 0,075 | 0,05 | 5,6 | 93 | 2,6 |
| 11 | 48 | 250 | 150 | 6 | 5 | 0,075 | 0,05 | 4,8 | 96 | 2,7 |
| 12 | 48 | 250 | 170 | 6 | 5 | 0,075 | 0,05 | 4,9 | 100 | 2,7 |
| 13 | 48 | 250 | 150 | 6 | 5 | 0,025 | - | 4,7 | 100 | 3,9 |
| 14 | 48 | 250 | 150 | 7 | 6 | 0,025 | - | 6,1 | 100 | 3,6 |

Beispiel 4

Zur Durchführung der Versuche 1-6 dieses Beispiels werden LDPE (d = 918; MI = 8) und zur Durchführung der Versuche 7-9 ULDPE (d = 900; MI = 2,2) verwendet und es wird der in Beispiel 3 beschriebene Zweischneckenextruder eingesetzt und Trigonox C als Peroxidkatalysator eingesetzt.

Einzelheiten der durchgeführten Versuche 1-9 sowie die Schmelzindices der erhaltenen gepfropften Polyethylene gehen aus der folgenden Tabelle 4 hervor.

TABELLE 4

| Versuch Nr. | Durchsatz g/min | UpM | Temp. ¤C | S/MA/Ac (2:2:1) ccm/min | MA Gew.-% | Peroxid Gew.-% | Stabilisator, Irganox 1076 Gew.-% | gebundenes MA Gew.-% | Umsatz % | MI g/10' |
|---|---|---|---|---|---|---|---|---|---|---|
| 1 | 50 | 250 | 150 | 7 | 6,3 | 0,075 | 0,05 | 6,2 | 98 | 2,8 |
| 2 | 104 | 250 | 150 | 14 | 6,4 | 0,075 | 0,05 | 6,3 | 99 | 2,8 |
| 3 | 50 | 250 | 170 | 7 | 7,6 | 0,075 | 0,05 | 7,4 | 97 | 2,3 |
| 4 | 102 | 250 | 170 | 14 | 5,9 | 0,075 | 0,05 | 5,8 | 98 | 2,7 |
| 5 | 50 | 250 | 170 | 7 | 7,5 | 0,025 | - | 7,1 | 95 | 3,0 |
| 6 | 52 | 250 | 150 | 7 | 6,8 | 0,025 | - | 6,7 | 96 | 3,3 |
| 7 | 52 | 250 | 190 | 7 | 5,4 | 0,05 | 0,05 | 5,4 | 100 | 0,4 |
| 8 | 52 | 250 | 190 | 7 | 5,4 | 0,05 | 0,1 | 4,8 | 89 | 0,5 |
| 9 | 52 | 100 | 190 | 7 | 5,4 | 0,05 | 0,05 | 5,1 | 94 | 0,4 |

Beispiel 5

Zur Durchführung dieses Beispiels wird ein ULDPE (d = 900; MI = 2,2) eingesetzt. Es wird der in Beispiel 3 verwendete Zweischneckenextruder eingesetzt und auch die dort beschriebene Arbeitsweise eingehalten. Die Temperatur des Extruders beträgt 190¤C und als Peroxidkatalysator wird Trigonox C verwendet.

Die Ergebnisse gehen aus der Tabelle 5 hervor.

TABELLE 5

| Versuch Nr. | Durchsatz g/min | UpM | S/MA/Ac (2:2:1) ccm/min | MA Gew.-% | Peroxid Gew.-% | Stabilisator, Irganox 1076 Gew.-% | gebundenes MA Gew.-% | Umsatz % | MI g/10' |
|---|---|---|---|---|---|---|---|---|---|
| 1 | 50 | 250 | 7 | 5,6 | - | - | 5,6 | 100 | 1,6 |
| 2 | 50 | 100 | 7 | 5,6 | - | - | 4,2 | 75 | 1,9 |
| 3 | 50 | 250 | 7 | 5,6 | 0,025 | - | 5,1 | 91 | 0,7 |
| 4 | 50 | 100 | 7 | 5,6 | 0,025 | - | 5,3 | 95 | 0,7 |
| 5 | 96 | 250 | 14 | 5,6 | 0,025 | - | 5,6 | 100 | 0,4 |
| 6 | 50 | 250 | 7 | 5,6 | 0,025 | 0,013 | 4,6 | 82 | 0,6 |
| 7 | 100 | 250 | 14 | 5,6 | 0,025 | 0,013 | 5,7 | 100 | 0,4 |
| 8 | 100 | 250 | 14 | 5,6 | - | - | 4,5 | 80 | 1,7 |

Die folgenden Beispiele 6 bis 13 erläutern die Anwendung der erfindungsgemässen gepfropften linearen Polyethylene zur Schlagfestigkeitsmodifizierung von thermoplastischen Polyamiden.

Es werden folgende Eigenschaften der schlagfestigkeitsmodifizierten Polyamide ermittelt:
- Izod-Schlagfestigkeit (gemessen nach ISO 180)
- E-Modul (gemessen nach ASTM-D-790)
- Formbeständigkeit (gemessen nach ISO R 527-1)
- Maximale Biegefestigkeit (gemessen nach ISO R 527-1)
- Bruchfestigkeit (gemessen nach ASTM-D-790)
- Dehnung (gemessen nach ASTM-D-790)

Es werden möglichst hohe Werte dieser Eigenschaften angestrebt.

Beispiel 6

Dieses Beispiel zeigt zum Vergleich das Vermischen von gemäss Beispiel 1 mit S/MA gepfropftem LDPE (d = 918; MI = 8) und zum Beispiel von gemäss Beispiel 2 mit S/MA gepfropftem VLDPE (d = 902; MI = 2,2) mit Polyamid 6, Polyamid 6,6 und Polyamid 4,6. Das Mischungsverhältnis Polyamid/gepfropftes PE beträgt 80/20. Das Vermischen erfolgt in einem Zweischneckenextruder bei einer Temperatur von 240¤C beim Einsatz von Polyamid 6, 275¤C beim Einsatz von Polyamid 6,6 bzw. 310¤C beim Einsatz von Polyamid 4,6.

Der folgenden Tabelle 6 sind die Eigenschaften der modifizierten Polyamide zu entnehmen.

TABELLE 6

| Versuch Nr. | PE | | | IZOD (KJ/m$^2$) | | | Formbeständigkeit ¤C | Polyamid |
|---|---|---|---|---|---|---|---|---|
| | gepfropftes PE | gebundenes MA Gew.-% | MI g/10' | 23¤C | -30¤C | -40¤C | | |
| 1 | LDPE | 3,0 | 3,5 | 118 | 13,1 | 12,8 | 57,8 | PA 6 |
| 2 | LDPE | 1,8 | 3,7 | 105 | 10,7 | 9,5 | 59,6 | PA 6 |
| 3 | VLDPE | 1,6 | 0,05 | 108 | 17,2 | 15 | 59,3 | PA 6 |
| 4 | VLDPE | 1,7 | 0,04 | 117 | 18,8 | 18,1 | 61,3 | PA 6 |
| 5 | LDPE | 3,0 | 3,5 | 11,2 | 8,1 | 6,6 | 71,8 | PA 6.6 |
| 6 | LDPE | 1,8 | 3,7 | 9,9 | 6,2 | 5,5 | 74,3 | PA 6.6 |
| 7 | VLDPE | 1,6 | 0,05 | 82,5 | 12,8 | 12,1 | 69,6 | PA 6.6 |
| 8 | VLDPE | 1,7 | 0,04 | 89 | 13,8 | 11,1 | 71,9 | PA 6.6 |
| 9 | LDPE | 3,0 | 3,5 | 76,1 | 11,3 | 12,1 | 84,9 | PA 4.6 |
| 10 | LDPE | 1,8 | 3,7 | 29 | 12,7 | 11,7 | 83,2 | PA 4.6 |
| 11 | VLDPE | 1,6 | 0,05 | 124 | 36,9 | 28,6 | 85,4 | PA 4.6 |
| 12 | VLDPE | 1,7 | 0,04 | 123 | 41,9 | 25,4 | 84,5 | PA 4.6 |

Beispiel 7

Zur Durchführung dieses Beispiels werden die in Beispiel 6 beschriebenen Bedingungen eingehalten, wobei in diesem Falle die Mischungsverhältnisse von Polyamid 6 und gepfropftem PE variiert werden.

Nähere Einzelheiten sind der Tabelle 7 zu entnehmen.

TABELLE 7

| Versuch Nr. | PE | | | PA 6/PE | IZOD (KJ/m$^2$) | | | E-MOD N/mm$^2$ |
|---|---|---|---|---|---|---|---|---|
| | gepfropftes PE | gebundenes MA Gew.-% | MI g/10' | | 23°C | -30°C | -40°C | |
| 1 | LDPE | 3,0 | 3,5 | 85/15 | 85,8 | 12,3 | 10,3 | 2500 |
| 2 | LDPE | 3,0 | 3,5 | 80/20 | 99,2 | 12,9 | 11,8 | 2360 |
| 3 | LDPE | 3,0 | 3,5 | 75/25 | 90,1 | 9,3 | 9,5 | 2190 |
| 4 | LDPE | 3,0 | 3,5 | 70/30 | 6,5 | 3,9 | 3,7 | 1650 |
| 5 | LDPE | 1,8 | 3,7 | 85/15 | 84,9 | 11,4 | 10,1 | 2500 |
| 6 | LDPE | 1,8 | 3,7 | 80/20 | 96,2 | 10,7 | 10,2 | 2380 |
| 7 | LDPE | 1,8 | 3,7 | 75/25 | 58,3 | 9,7 | 8,0 | 2190 |
| 8 | LDPE | 1,8 | 3,7 | 70/30 | 7,2 | 5,2 | 5,1 | 1770 |
| 9 | VLDPE | 1,6 | 0,05 | 85/15 | 69,9 | 14,2 | 12,6 | 2200 |
| 10 | VLDPE | 1,6 | 0,05 | 80/20 | 105 | 18,3 | 17,7 | 2050 |
| 11 | VLDPE | 1,6 | 0,05 | 75/25 | 125 | 26,8 | 20,9 | 1910 |
| 12 | VLDPE | 1,6 | 0,05 | 70/30 | 112 | 83,7 | 30,6 | 1740 |
| 13 | VLDPE | 1,7 | 0,04 | 85/15 | 80,3 | 17,2 | 14,2 | 2210 |
| 14 | VLDPE | 1,7 | 0,04 | 80/20 | 109 | 20,5 | 17,5 | 2015 |
| 15 | VLDPE | 1,7 | 0,04 | 75/25 | 123 | 56,6 | 26,0 | 1865 |
| 16 | VLDPE | 1,7 | 0,04 | 70/30 | 121 | 91,9 | 30,5 | 1700 |

Beispiel 8

Dieses Beispiel zeigt das Vermischen von gemäss Beispiel 2 mit S/MA gepfropftem VLDPE (d = 902; MI = 2,2) und ULDPE (d = 900; MI = 2,2) mit Nylon 6 (PA 6).

Die Versuchsbedingungen sowie die Eigenschaften der erhaltenen Produkte gehen aus der Tabelle 8 hervor.

TABELLE 8

| Versuch Nr. | PE | | | PA/PE | IZOD (KJ/m$^2$) | | | E-MOD N/mm$^2$ | maximale Biegefestigkeit N/mm$^2$ |
|---|---|---|---|---|---|---|---|---|---|
| | gepfropftes PE | gebundenes MA Gew.-% | MI g/10' | | 23¤C | -30¤C | -40¤C | | |
| 1 | - | - | - | 100/0 | 5,4 | 4,2 | 4,1 | 2075 | 86,9 |
| 2 | VLDPE | 1,8 | 0,04 | 80/20 | 98,7 | 18,8 | 15,7 | 1900 | 77,6 |
| 3 | VLDPE | 1,8 | 0,04 | 60/40 | > 100 | 19,3 | 16,9 | 1260 | 52,4 |
| 4 | VLDPE | 1,8 | 0,04 | 50/50 | 90 | 15,4 | 8,8 | 990 | 41,2 |
| 5 | VLDPE | 1,8 | 0,04 | 40/60 | 85 | 8,4 | 4,8 | 720 | 29,9 |
| 6 | ULDPE | 1,2 | 0,55 | 80/20 | 116 | 18,0 | 15,0 | 2020 | 81,8 |
| 7 | ULDPE | 1,2 | 0,55 | 70/30 | 122 | 20,1 | 15,8 | 1750 | 71,3 |
| 8 | ULDPE | 1,2 | 0,55 | 60/40 | 114 | 14,7 | 12,2 | 1330 | 54,2 |
| 9 | ULDPE | 1,2 | 0,55 | 50/50 | 110 | 17,0 | 14,3 | 980 | 40,8 |
| 10 | ULDPE | 1,2 | 0,55 | 40/60 | 95 | 22,7 | 16,0 | 780 | 32,1 |
| 11 | ULDPE | 1,5 | 0,50 | 80/20 | 122 | 17,4 | 13,8 | 2130 | 85,3 |
| 12 | ULDPE | 1,5 | 0,50 | 70/30 | 124 | 18,5 | 15,2 | 1785 | 73,0 |
| 13 | ULDPE | 1,5 | 0,50 | 60/40 | 107 | 13,5 | 11,1 | 1340 | 54,3 |
| 14 | ULDPE | 1,5 | 0,50 | 50/50 | 95 | 15,0 | 12,5 | 1000 | 40,4 |
| 15 | ULDPE | 1,5 | 0,50 | 40/60 | 80 | 20,9 | 15,5 | 750 | 31,3 |
| 16 | ULDPE | 0 | 2,2 | 80/20 | 20,6 | 7,5 | 7,2 | 2200 | 91,7 |

Beispiel 9

Dieses Beispiel zeigt das Vermischen von ULDPE (d = 900; MI = 2,2), gepfropft mit S/MA gemäss Beispiel 2, mit Nylon 6,6.

Die Ergebnisse gehen aus der Tabelle 9 hervor.

TABELLE 9

| Versuch Nr. | PE | | | PA/PE | IZOD (KJ/m$^2$) | | | E-MOD N/mm$^2$ | maximale Biegefestigkeit N/mm$^2$ |
|---|---|---|---|---|---|---|---|---|---|
| | gepfropftes PE | gebundenes MA Gew.-% | MI g/10' | | 23¤C | -30¤C | -40¤C | | |
| 1 | - | - | - | 100/0 | 4,6 | 4,2 | 3,9 | 2150 | 89,2 |
| 2 | ULDPE | 1,2 | 0,55 | 80/20 | 84,0 | 12,8 | 11,6 | 2140 | 89,5 |
| 3 | ULDPE | 1,2 | 0,55 | 70/30 | 103 | 17,1 | 12,8 | 1830 | 75,7 |
| 4 | ULDPE | 1,2 | 0,55 | 60/40 | 102 | 16,0 | 12,7 | 1410 | 59,8 |
| 5 | ULDPE | 1,2 | 0,55 | 50/50 | 85,3 | 16,5 | 13,8 | 990 | 41,9 |
| 6 | ULDPE | 1,2 | 0,55 | 40/60 | 68,4 | 16,2 | 12,3 | 600 | 25,6 |
| 7 | ULDPE | 1,5 | 0,50 | 80/20 | 79,3 | 14,9 | 12,2 | 2140 | 88,5 |
| 8 | ULDPE | 1,5 | 0,50 | 70/30 | 80,6 | 15,2 | 12,4 | 1855 | 76,5 |
| 9 | ULDPE | 1,5 | 0,50 | 60/40 | 72,1 | 13,4 | 11,3 | 1410 | 59,9 |
| 10 | ULDPE | 1,5 | 0,50 | 50/50 | 62,1 | 11,7 | 9,2 | 1010 | 41,6 |
| 11 | ULDPE | 1,5 | 0,40 | 40/60 | 64,2 | 14,7 | 11,1 | 630 | 27,4 |

Beispiel 10

Dieses Beispiel zeigt das Vermischen von ULDPE (d = 900; MI = 2,2) gepfropft mit S/MA gemäss Beispiel 4, mit Nylon 6.

Die Versuchsbedingungen sowie die Eigenschaften der erhaltenen Produkte gehen aus der folgenden Tabelle 10 hervor.

TABELLE 10

| Versuch Nr. | gebundenes MA Gew.-% | MI 9/10' | PA/PE | IZOD (KJ/m$^2$) | | |
|---|---|---|---|---|---|---|
| | | | | 23¤C | -30¤C | -40¤C |
| 1 | 4,5 | 1,0 | 80/20 | ≫100 | 17,0 | 14,5 |
| 2 | 4,5 | 1,0 | 70/30 | ≫ 100 | 16,9 | 13,8 |
| 3 | 4,5 | 1,0 | 60/40 | 109,7 | 14,9 | 11,5 |
| 4 | 4,5 | 1,0 | 50/50 | 87,1 | 12,8 | 10,5 |
| 5 | 4,5 | 1,0 | 40/60 | 74,8 | 14,2 | 8,9 |
| 6 | 4,9 | 0,9 | 80/20 | ≫ 100 | 16,2 | 12,9 |
| 7 | 4,9 | 0,9 | 70/30 | ≫ 100 | 17,2 | 12,6 |
| 8 | 4,9 | 0,9 | 60/40 | 112,9 | 13,9 | 10,3 |
| 9 | 4,9 | 0,9 | 50/50 | 93,3 | 12,7 | 10,9 |
| 10 | 4,9 | 0,9 | 40/60 | 77,5 | 13,3 | 11,6 |
| 11 | 5,8 | 0,8 | 80/20 | ≫ 100 | 20,6 | 14,8 |
| 12 | 5,8 | 0,8 | 70/30 | ≫ 100 | 18,6 | 13,5 |
| 13 | 5,8 | 0,8 | 60/40 | 98,6 | 17,7 | 12,1 |
| 14 | 5,8 | 0,8 | 50/50 | 98,1 | 14,0 | 11,3 |
| 15 | 5,8 | 0,8 | 40/60 | 84,6 | 18,5 | 14,7 |

Beispiel 11

Dieses Beispiel zeigt zum Vergleich das Vermischen von LDPE (d = 918; MI = 8) und zum Beispiel von VLDPE (d = 902; MI = 2,2) und Mischungen mit dem LDPE, jeweils gepfropft mit S/MA gemäss den Beispielen 3 und 4, mit Nylon 6.

Die Versuchsbedingungen sowie die Eigenschaften des modifizierten Nylons gehen aus der folgenden Tabelle 11 hervor.

**Beispiel 12**

Dieses Beispiel zeigt zum Vergleich das Vermischen von LDPE (d = 918; MI = 8) und zum Beispiel von ULDPE (d = 900; MI = 2,2) und Mischungen mit dem LDPE, jeweils gepfropft mit S/MA gemäss den

T A B E L L E   11

| Versuch Nr. | gepfropftes PE | gebundenes MA Gew.-% | MI g/10' | PA/PE | IZOD (KJ/m²) 23°C | 0°C | -10°C | -30°C | -40°C | Formbestän-digkeit °C | E-MOD N/mm² | max. Biege-festig-keit | Bruch-festig-keit N/mm² Zieh-probe | Deh-nung % Zieh-probe |
|---|---|---|---|---|---|---|---|---|---|---|---|---|---|---|
| 1 | LDPE | 5,15 | 3,56 | 80/20 | > 100 | 18,8 | 16,6 | 11,4 | 12,1 | 65,2 | 2280 | 91,7 | 50,5 | 46 |
| 2 | LDPE | 5,15 | 3,56 | 70/30 | 59,9 | 8,8 | - | - | - | 68,1 | 1890 | 76,7 | 27,8 | 9 |
| 3 | LDPE | 5,15 | 3,56 | 60/40 | - | - | - | - | - | - | - | - | - | - |
| 4 | LDPE | 5,15 | 3,56 | 50/50 | - | - | - | - | - | - | - | - | 20,5 | 6 |
| 5 | LDPE | 5,15 | 3,56 | 40/60 | - | - | - | - | - | - | - | - | 15,4 | 9 |
| 6 | VLDPE | 4,4 | 0,45 | 80/20 | > 100 | > 100 | 89,6 | - | 25,3 | 61,1 | 2150 | 86,2 | 57,5 | 86 |
| 7 | VLDPE | 4,4 | 0,45 | 70/30 | > 100 | > 100 | > 100 | - | 27,9 | 61,8 | 1880 | 74,5 | 65,4 | 151 |
| 8 | VLDPE | 4,4 | 0,45 | 60/40 | > 100 | > 100 | 98,3 | 23,3 | 21,6 | 59,8 | 1440 | 57,7 | 54,2 | 217 |
| 9 | VLDPE | 4,4 | 0,45 | 50/50 | 93,9 | 85,8 | 93,5 | 21,8 | 18 | 62,0 | 1060 | 42,7 | 45,7 | 188 |
| 10 | VLDPE | 4,4 | 0,45 | 40/60 | 73,6 | 75,2 | 82,8 | 85,3 | 29,6 | 59,4 | 730 | 30 | 35,2 | 182 |
| 11 | LDPE/ VLDPE | 5,5/ 4,4 | 3,56/ 4,4 | 80/ 13,3/ 6,7 | > 100 | 94,3 | 72,9 | 22,9 | 15,9 | 65,8 | 2250 | 89,9 | 55,4 | 43 |
| 12 | LDPE/ VLDPE | 5,5/ 4,4 | 3,56/ 4,4 | 80/ 10/10 | > 100 | 94,4 | 79,2 | 21,9 | 14,9 | 60,7 | 2250 | 90,1 | 57,3 | 72 |
| 13 | LDPE/ VLDPE | 5,5/ 4,4 | 3,56 4,4 | 80/ 6,7/ 13,3 | > 100 | 99,7 | 87,6 | 26,7 | 16,1 | 62,3 | 2210 | 87,1 | 55,6 | 60 |

13

Beispielen 3 und 4 mit Nylon 6,6.

Die Versuchsbedingungen sowie die Eigenschaften des modifizierten Nylons gehen aus der folgenden Tabelle 12 hervor.

**TABELLE 12**

| Versuch Nr. | gepfropftes PE | gebundenes MA Gew.-% | MI g/10' | PA/PE | IZOD (kJ/m²) 23°C | 0°C | -10°C | -30°C | -40°C | Form-beständigkeit °C | E-MOD N/mm² | max. Biege-festigkeit | Bruch-festigkeit N/mm² Zieh-probe | Deh-nung % Zieh-probe |
|---|---|---|---|---|---|---|---|---|---|---|---|---|---|---|
| 1 | LDPE | 5,15 | 3,56 | 80/20 | 10,9 | 9 | - | - | - | 83,8 | 2250 | 93,8 | 54,5 | 14 |
| 2 | LDPE | 5,15 | 3,56 | 70/30 | 12,7 | 10,4 | 7,7 | 7,5 | - | 76,0 | 1950 | 81 | 49,3 | 26 |
| 3 | LDPE | 5,15 | 3,56 | 60/40 | 4,2 | - | - | - | - | 70,2 | 1510 | 62,4 | 41,8 | 11 |
| 4 | LDPE | 5,15 | 3,56 | 50/50 | - | - | - | - | - | - | - | - | 21,6 | 7 |
| 5 | LDPE | 5,15 | 3,56 | 40/60 | - | - | - | - | - | - | - | - | 14,1 | 8 |
| 6 | VLDPE | 4,4 | 3,56 | 80/20 | 67,2 | 43,8 | 17,1 | 14,1 | 10,7 | 78,0 | 2140 | 89,7 | 49,5 | 20 |
| 7 | VLDPE | 4,4 | 3,56 | 70/30 | 93,2 | 84,3 | 73,2 | 22,4 | 14,5 | 78,1 | 1730 | 70,5 | 44,7 | 34 |
| 8 | VLDPE | 4,4 | 3,56 | 60/40 | 96,2 | 82,1 | 26,9 | 20,5 | 15,7 | 61,4 | 1390 | 56,8 | 39,5 | 64 |
| 9 | VLDPE | 4,4 | 3,56 | 50/50 | 91,0 | 80,3 | 28,2 | 16,9 | 15,7 | 68,2 | 1010 | 42 | 31,2 | 88 |
| 10 | VLDPE | 5,15 | 3,56 | 40/60 | - | - | - | - | - | - | - | - | 20 | 66 |
| 11 | LDPE/ VLDPE | 5,15 /4,4 | 3,56 | 80/ 13,3/6,7 | 48,6 | 12,9 | 10,9 | 9,2 | 8,7 | 79,5 | 2190 | 91,6 | 51,3 | 17 |
| 12 | LDPE/ VLDPE | 5,15 /4,4 | 3,56 | 80/ 10/10 | 54,6 | 13,6 | 13,2 | 9,6 | 7,6 | 81,3 | 2200 | 91,3 | 49,4 | 18 |
| 13 | LDPE/ VLDPE | 5,15 /4,4 | 3,56 | 80/ 6,7/13,3 | 63,2 | 14,7 | 14,1 | 10,1 | 10,7 | 81,4 | 2160 | 89,7 | 51,2 | 17 |

Beispiel 13

Dieses Beispiel zeigt zum Vergleich das Vermischen von LDPE (d = 918; MI = 8) und zum Beispiel von VLDPE (d = 902; MI = 2,2) und Mischungen mit dem LDPE, jeweils gepfropft mit S/MA gemäss den Beispielen 3 und 4 mit Nylon 4,6.

Die Versuchsbedingungen sowie die Eigenschaften des modifizierten Nylons gehen aus der folgenden Tabelle 13 hervor.

T A B E L L E   1 3

| Versuch Nr. | gepfropftes PE | gebundenes MA Gew.-% | MI g/10' | PA/PE | IZOD (KJ/m²) 23°C | 0°C | -10°C | -30°C | -40°C | Formbeständigkeit °C | E-MOD N/mm² | max. Biegefestigkeit | Bruchfestigkeit N/mm² Ziehprobe | Dehnung % Ziehprobe |
|---|---|---|---|---|---|---|---|---|---|---|---|---|---|---|
| 1 | LDPE | 5,15 | 3,56 | 80/20 | 19,8 | 15,3 | 13 | 9,6 | 9,1 | 84,6 | 2200 | 94,5 | 75 | 33 |
| 2 | LDPE | 5,15 | 3,56 | 75/25 | 19,0 | 14,2 | 10,8 | 9,4 | 8,3 | 85,3 | 2030 | 86,8 | 71,8 | 35 |
| 3 | LDPE | 5,15 | 3,56 | 70/30 | 13,7 | 11,7 | 9,6 | 7,8 | - | 86,3 | 1880 | 80,0 | 63,4 | 20 |
| 4 | VLDPE | 4,4 | 0,45 | 80/20 | > 100 | 94 | 90,1 | 34,7 | 25,6 | 86,3 | 2070 | 91,1 | 71 | 42 |
| 5 | VLDPE | 4,4 | 0,45 | 75/25 | 93,5 | 85,9 | 84,4 | 36,1 | 29,2 | 86,9 | 1790 | 77,9 | 65,3 | 44 |
| 6 | VLDPE | 4,4 | 0,45 | 70/30 | 93,4 | 88,7 | 81,5 | 35,7 | 29,4 | 87,1 | 1820 | 79,1 | 65 | 41 |
| 7 | LDPE/ VLDPE | 5,15/ 4,4 | 3,56/ 0,45 | 80/ 13,3/6,7 | 24,3 | 19,7 | 15,9 | 12,6 | 12,7 | 89,7 | 2200 | 97,7 | 72 | 30 |
| 8 | LDPE/ VLDPE | 5,15/ 4,4 | 3,56/ 0,45 | 80/ 10/10 | 73,8 | 31,7 | 28,8 | 17,5 | 17,7 | 89,0 | 2050 | 90,6 | 70,7 | 36 |
| 9 | LDPE/ VLDPE | 5,15/ 4,4 | 3,56/ 0,45 | 80/ 6,7/13,3 | 75,1 | 34,3 | 29 | 25 | 16,3 | 89,0 | 2050 | 90,2 | 70,4 | 36 |

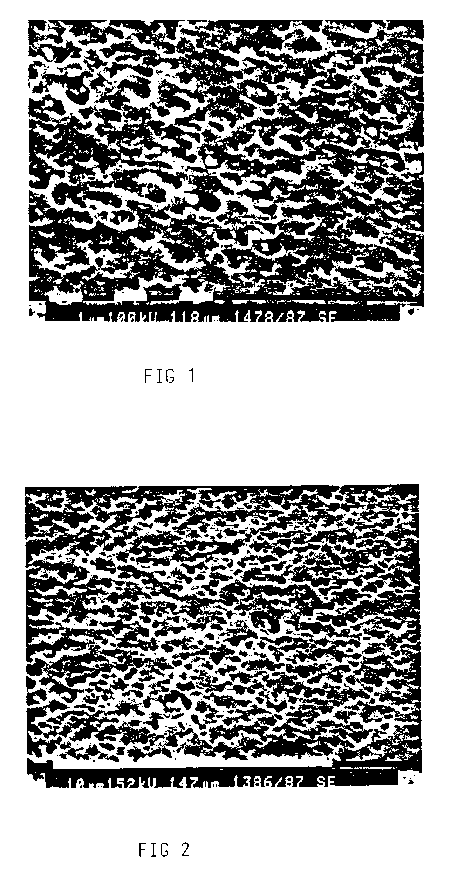

Beispiel 14, Fig. 1 und Fig. 2

Dieses Beispiel zeigt Aufnahmen der Mischungen gemäss Beispiel 7, Versuch Nr. 2 (zum Vergleich), Fig. 1, 8500 x vergrössert, und Beispiel 7, Versuch Nr. 10, (zum Beispiel), Fig. 2, 6800 x vergrössert. Zum Zweck dieser Aufnahmen ist die S/MA-LDPE-PA-Mischung bzw. S/MA-VLDPE-PA-Mischung mit Sauerstoffplasma geätzt worden. Diese Aufnahmen zeigen deutlich dass die gepfropften LDPE-Teilchen grösser (bis 0,6 $\mu$m) als die gepfropften VLDPE-Teilchen (bis 0,07 $\mu$m) sind.

Beispiel 15

Dieses Beispiel zeigt zum Vergleich das Vermischen von handelsüblichen Schlagfestigkeitsmodifizierungsmitteln und zum Beispiel von gemäss Beispiel 4 mit S/MA gepfropftem VLDPE (d = 902; MI = 2,2) mit Polyethylenterephthalat (Arnite A 104-900). Tabelle 14.

TABELLE 14

| Versuch Nr. | Schl. f. mod.-mittel | PET/mod. (Gew.) | Izod 23°C KJ/m$^2$ |
|---|---|---|---|
| 1 | - | 100/0 | 4 |
| 2 | Polybond 1016$^R$ | 80/20 | 5,5 |
| 3 | Polybond 1016$^R$ | 70/30 | 5,2 |
| 4 | Hytrel 4056$^R$ | 80/20 | 6,8 |
| 5 | Hytrel 4056$^R$ | 70/30 | 8,3 |
| 6 | Paraloid 334$^R$ | 80/20 | 9,2 |
| 7 | Paraloid 334$^R$ | 70/30 | 8,9 |
| 8 | SMA-VLDPE | 80/20 | 10,7 |
| 9 | SMA-VLDPE | 70/30 | 11,9 |

**Patentansprüche**

1. Gepfropftes lineares Polyethylen mit einer Dichte unter 940 kg/m$^3$, ausgenommen Ethylen-$\alpha$-Olefin- und Ethylen-$\alpha$-Olefin-Dien-Kautschuke, dadurch gekennzeichnet, dass das Polyethylen mit einer oder mehreren carboxylgruppenhaltigen Verbindungen und einer oder mehreren vinylaromatischen Verbindungen gepfropft ist.

2. Polyethylen nach Anspruch 1, dadurch gekennzeichnet, dass die carboxylgruppenhaltige Verbindung Maleinsäureanhydrid ist.

3. Polyethylen nach einem der Ansprüche 1 bis 2, dadurch gekennzeichnet, dass die vinylaromatische Verbindung Styrol ist.

4. Polyethylen nach einem der Ansprüche 1 bis 3, dadurch gekennzeichnet, dass das Molverhältnis der vinylaromatischen Verbindung(en) zu der (den) carboxylgruppenhaltigen Verbindung(en) 5 : 1 bis 1 : 5 beträgt.

5. Polyethylen nach einem der Ansprüche 1 bis 4, dadurch gekennzeichnet, dass die Menge an carboxylhaltiger(n) Verbindung(en) 0,2 bis 20 Gew.-%, bezogen auf das Polyethylen, beträgt.

6. Polyethylen nach einem der Ansprüche 1 bis 5, dadurch gekennzeichnet, dass die Dichte des linearen Polyethylens ≦ 910 kg/m$^3$ ist.

7. Polyethylen nach Anspruch 6, dadurch gekennzeichnet, dass die Dichte des linearen Polyethylens ≦ 900 kg/m$^3$ ist.

8. Mischung von 5 bis 95 Gew.-%, bezogen auf die Gesamtmischung, eines gepfropften linearen Polyethylens gemäss einem der Ansprüche 1 bis 7, mit 5 bis 95 Gew.-% eines oder mehrerer mineralischer Füllstoffe und/oder anderer Kunststoffe.

**9.** Verfahren zur Herstellung von gepfropftem Polyethylen mit einer Dichte unter 940 kg/m$^3$ durch Umsetzung des Polyethylens mit einer oder mehreren carboxylgruppenhaltigen Verbindungen und einer oder mehreren vinylaromatischen Verbindungen bei einer Temperatur oberhalb 110¤C unter der Einwirkung von Scherkräften in Anwesenheit eines Lösungsmittels und/oder eines Radikalinitiators sowie gegebenenfalls eines Antioxidationsmittels.

**10.** Verwendung eines Polyethylens oder einer Mischung gemäss einem der Ansprüche 1 bis 8 als Schlagfestigkeitsmodifizierungsmittel oder als Komponente eines derartigen Mittels.

**11.** Verwendung eines Polyethylens oder einer Mischung gemäss einem der Ansprüche 1 bis 8 als Klebemittel oder Klebeschicht oder als Komponente eines derartigen Mittels oder einer derartigen Schicht.

**12.** Verwendung eines Polyethylens oder einer Mischung gemäss einem der Ansprüche 1 bis 8 als Heisssiegelschicht oder als Komponente einer derartigen Schicht.

**13.** Verwendung eines Polyethylens oder einer Mischung gemäss einem der Ansprüche 1 bis 8 als Haftschicht in einem Mehrschichtfilm oder als Komponente einer derartigen Haftschicht.

**14.** Verwendung des Polyethylens gemäss einem der Ansprüche 1 bis 7 oder einer Mischung gemäss Anspruch 8 zur Erhöhung der Verträglichkeit von an sich unverträglicher oder schlecht verträglicher Materialien.

**15.** Verwendung eines Polyethylens oder einer Mischung gemäss einem der Ansprüche 1 bis 8 als Haftverbesserungsmittel von Polymeren und Füllstoffen oder als Komponente eines derartigen Mittels.

**Claims**

**1.** Graft polymer of a linear polyethylene of density below 940 kg/m$^3$, excepting ethylene-$\alpha$-olefin and ethylene-$\alpha$-olefin-diene rubbers, characterized in that the polyethylene is grafted with one or several carboxyl-group-containing compounds and one or several vinylaromatic compounds.

**2.** Polyethylene according to Claim 1, characterized in that the carboxyl-group-containing compound is maleic anhydride.

**3.** Polyethylene according to one of Claims 1 to 2, characterized in that the vinylaromatic compound is styrene.

**4.** Polyethylene according to one of Claims 1 to 3, characterized in that the molar ratio of the vinylaromatic compound(s) to the carboxyl-group-containing compound(s) is 5:1 to 1:5.

**5.** Polyethylene according to one of Claims 1 to 4, characterized in that the amount of carboxyl-group-containing compound(s) is 0.2 to 20 wt.%, relative to the polyethylene.

**6.** Polyethylene according to one of Claims 1 to 5, characterized in that the density of the linear polyethylene is $\leqq$ 910 kg/m$^3$.

**7.** Polyethylene according to Claim 6, characterized in that the density of the linear polyethylene is $\leqq$ 900 kg/m$^3$.

**8.** Mixture of 5 to 95 wt.%, relative to the whole mixture, of a graft linear polyethylene according to one of Claims 1 to 7 with 5 to 95 wt.% of one or several mineral fillers and/or other plastics.

**9.** Process for the production of a graft polyethylene of density below 940 kg/m$^3$ by reaction of the polyethylene with one or several carboxyl-group containing compounds and one or several vinylaromatic compounds at a temperature above 110 °C under the effect of shearing forces, in

17

EP 0 286 734 B1

presence of a solvent and/or a radical initiator and optionally an antioxidant.

10. Use of a polyethylene or a mixture according to one of Claims 1 to 8 as an impact strength modifier or as component of such an agent.

11. Use of a polyethylene or a mixture according to one of Claims 1 to 8 as an adhesive or adhesive film or as a component of such an adhesive or of such a film.

12. Use of a polyethylene or a mixture according to one of Claims 1 to 8 as a hot sealing film or as a component of such a film.

13. Use of a polyethylene or a mixture according to one of Claims 1 to 8 as a bonding layer in a multilayer film or as a component of such a bonding layer.

14. Use of the polyethylene according to one of Claims 1 to 7 or a mixture according to Claim 8 for increasing the compatibility of materials which in themselves are incompatible or poorly compatible.

15. Use of a polyethylene or a mixture according to one of Claims 1 to 8 as an improver of the adhesion of polymers and fillers or as a component of such an agent.

**Revendications**

1. Polyéthylène linéaire greffé avec une densité inférieure à 940 kg/m$^3$, sauf les caoutchoucs éthylène-$\alpha$-oléfine et éthylène-$\alpha$-oléfine-diène, caractérisé en ce qu'on greffe le polyéthylène avec un ou plusieurs composés comprenant des groupes carboxyles et un ou plusieurs composés vinylaromatiques.

2. Polyéthylène selon la revendication 1, caractérisé en ce que le composé contenant des groupes carboxyles est l'anhydride maléique.

3. Polyéthylène selon l'une des revendications 1 à 2, caractérisé en ce que le composé vinylaromatique est le styrène.

4. Polyéthylène selon l'une des revendications 1 à 3, caractérisé en ce que la proportion molaire de(s) composé(s) vinylaromatique(s) au(x) composé(s) contenant des groupes carboxyles est de 5 : 1 à 1 : 5.

5. Polyéthylène selon l'une des revendications 1 à 4, caractérisé en ce que la quantité de composé(s) contenant des carboxyles est de 0,2 à 20% poids par rapport au polyéthylène.

6. Polyéthylène selon l'une des revendications 1 à 5, caractérisé en ce que la densité du polyéthylène linéaire est ≦ 910 kg/m$^3$.

7. Polyéthylène selon la revendication 6, caractérisé en ce que la densité du polyéthylène linéaire est ≦ 900 kg/m$^3$.

8. Mélange de 5 à 95% pds, par rapport au mélange total, d'un polyéthylène linéaire selon l'une des revendications 1 à 7, avec 5 à 95% pds d'une ou plusieurs charges minérales et/ou d'autres matières plastiques.

9. Procédé de fabrication de polyéthylène greffé avec une densité inférieure à 940 kg/m$^3$ par réaction du polyéthylène avec un ou plusieurs composé(s) contenant des groupes carboxyles et un ou plusieurs composé(s) vinylaromatiques à une température supérieure à 110°C sous l'effet de forces de cisaillement en présence d'un solvant et/ou d'un initiateur radicalaire ainsi que le cas échéant d'un antioxydant.

10. Utilisation d'un polyéthylène ou d'un mélange selon l'une des revendications 1 à 8 comme agent modifiant la résistance au choc ou comme composant d'un tel matériau.

11. Utilisation d'un polyéthylène ou d'un mélange selon l'une des revendications 1 à 8 comme adhésif ou

18

comme couche de colle ou comme composant d'un tel moyen ou d'une telle couche.

12. Utilisation d'un polyéthylène ou d'un mélange selon l'une des revendications 1 à 8 comme couche adhésive thermofusible ou comme composant d'une telle couche.

13. Utilisation d'un polyéthylène ou d'un mélange selon l'une des revendications 1 à 8 comme couche adhésive dans un film multicouche ou comme composant d'une telle couche adhésive.

14. Utilisation du polyéthylène selon l'une des revendications 1 à 7 ou d'un mélange selon la revendication 8 pour augmenter la compatibilité de matériaux incompatibles en soi ou peu compatibles.

15. Utilisation d'un polyéthylène ou d'un mélange selon l'une des revendications 1 à 8 comme agent améliorant l'adhérence de polymères et de charges ou comme composant d'un tel agent.

FIG 1

FIG 2